# EUROPEAN PATENT SPECIFICATION

(11) **EP 3 380 850 B1**
(45) Date of publication and mention of the grant of the patent: **11.03.2020**
(21) Application number: 16831763.4
(22) Date of filing: 22.11.2016
(51) Int. Cl.: G01P 21/00

(54) **ACCELEROMETER SYSTEM WITH AUTOMATIC CALIBRATION**
BESCHLEUNIGUNGSMESSSYSTEM MIT AUTOMATISCHER KALIBRIERUNG
SYSTÈME D'ACCÉLÉROMÈTRE AVEC ÉTALONNAGE AUTOMATIQUE

(30) Priority: 23.11.2015 IT UB20155780
(43) Date of publication of application: 03.10.2018
(73) Proprietor: Sequoia IT S.R.L., 10024 Moncalieri (IT)
(72) Inventor: MANGIAROTTI, Massimo, I-10024 Moncalieri (TO) (IT); TITOLO, Massimiliano, I-10024 Moncalieri (TO) (IT)
(74) Representative: Garavelli, Paolo
(86) International application number: PCT/IT2016/000276
(87) International publication number: WO 2017/090067

(56) References cited:
- EP-A1- 2 147 321
- EP-A2- 2 317 328
- GB-A- 2 146 775

## Description

The present invention refers to an accelerometer system with automatic calibration.

In literature, there are several solutions to create accelerometers which are self-calibrated or capable of guaranteeing their own calibration. As an example, suffice it to mention document EP-A-2147321 "Wide-band accelerometer self-recognising its calibration", which has several aspects in common with the present invention, but which is based on the presence of vibrations, of an enough amplitude and in a pre-set range of frequency, with which the calibration algorithm can be performed. Also document EP-A-2147321, like in other examples in literature, does not solve all those cases in which spontaneous vibrations, like those applications in a civil or structural environment or induced applications, unless actual calibrators are inserted in the measuring chain, which are costly and with big sizes with respect to accelerometers.

Object of the present invention is solving the above prior art problems by providing an accelerometer with automatic integrated calibration, with a low technologic impact and having a reduced cost, which allows solving the calibration problems in any application case.

The above and other objects and advantages of the invention, as will appear from the following description, are obtained with an accelerometer with automatic calibration as claimed in Claim 1. Preferred embodiments and non-trivial variations of the present invention are claimed in the dependent Claims.

It is intended that all enclosed claims are an integral part of the present disclosure.

The present invention will be better described by some preferred embodiments thereof, given as a non-limiting example, with reference to the enclosed drawings, in which:
- Figure 1 is a block diagram of an embodiment of the accelerometer according to the present invention;
- Figure 2 shows two operating diagrams of the two transducers of which the accelerometer of the present invention is composed.

With reference to the Figures, a preferred embodiment of the accelerometer of the present invention is shown and described. It will be immediately obvious that numerous variations and modifications (for example related to shape, sizes, arrangements and parts with equivalent functionality) could be made to what is described, without departing from the scope of the invention as appears from the enclosed claims.

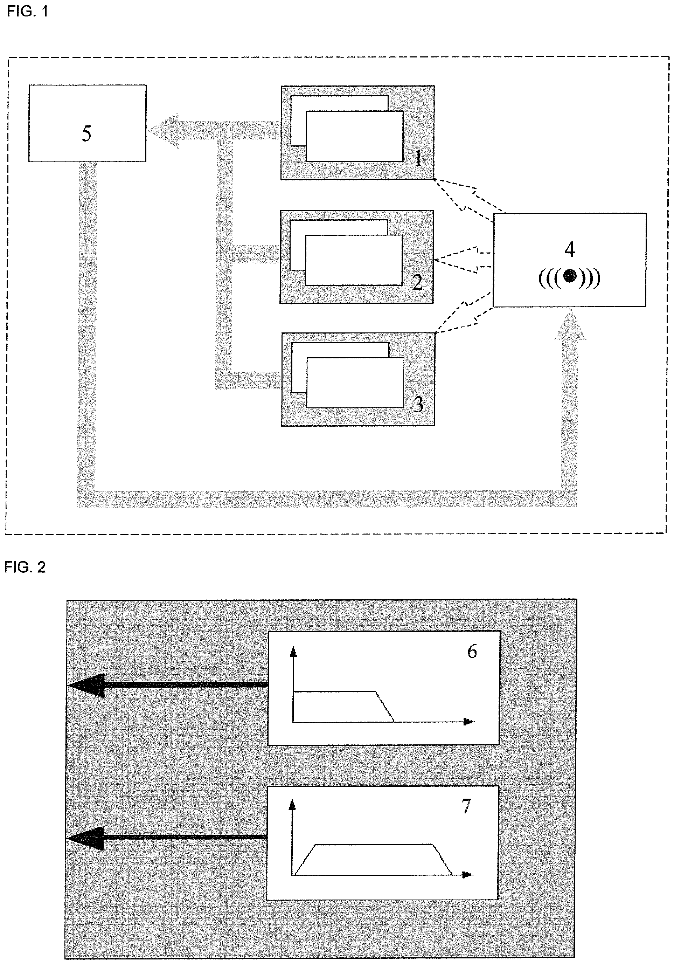

Subject matter of the present invention is a sensor for measuring the mono- or multi-axial acceleration with a wide frequency spectrum and capable of autonomously verifying and correcting its correct calibration. The system, shown in Figure 1, is composed of the union in a single container, of a group of different types of accelerometers for every measuring axis x, y and z (1, 2 and 3), of a device (4) capable of generating a vibration in a predefined range of frequencies and of an electronic circuit (5) for conditioning signals coming from the accelerometers, for checking the vibrating system and for managing the outputs.

In detail, each group of accelerometers (Figure 2) will be composed of at least two transducers (6 and 7) which will be able to read, in parallel, different frequency bands which are partially overlapped and one of which has a band which starts from zero frequency (6) or which is able to check its actual operation and guarantee its calibration in time.

The combination of the above elements, therefore, allows, through the electronic circuit, the combination of the different acceleration readings and the reconstruction of a global signal of the acceleration measure with wide spectrum, capable of being transferred, in a digital or analogue way, as output of the device.

The first transducer will further allow the electronic circuit to verify its actual operation and calibration, due to comparing the gravity acceleration with the reading of the value at zero frequency.

Starting from the certified measure of the first accelerometer (6), the electronic circuit (5) will be able to drive the vibrating system (4), generating a vibration in the range of overlapping of the two frequency bands of the different accelerometers. The electronic circuit will then compare the readings of the two different transducers, performing the calibration of the second transducer (7) starting from the calibrated measure of the first transducer (6). The electronic circuit will reconstruct the two different signals in a single signal, creating a single (digital or analogue) output equivalent to the one which an accelerometer would have should it be always calibrated and with a frequency band equal to the interval between 0 Hz (namely, the lower limit of the first transducer (6)) and the maximum limit of the second transducer (7).

The main operating principle of the invention can be exploited both with a simple system with two transducers, and on a system with many transducers with overlapping with couples with different frequency ranges, which allows calibrating the whole chain of transducers and provides a reading with wide frequency spectrum which is always correct and verified in real time.

Summarizing, the accelerometer system with automatic calibration of the invention is composed of: an electronic conditioning and digitizing circuit (5), a vibrating device (4) driven by the electronic circuit (5), and a set of groups of accelerometer transducers (1, 2, 3) wherein:
a. each group is assembled along the direction of each of the measuring axes of the accelerometer system
b. each group is composed of at least two accelerometer transducers capable of reading different frequency bands which are partially overlapped
c. each group is composed of a first transducer which has a band starting from the zero frequency or which is able to autonomously guarantee validity and calibration of the performed reading.

In particular, the above described system can further comprise a analysis algorithm which, managed by the electronic circuit (5), allows reading the digitized signals coming from each group of accelerometers (1, 2, 3) and recombining it for each axis in a global wide band signal, which has value zero as lower frequency, or the lower value of the band of the first transducer, and as maximum value the maximum frequency value of the accelerometer capable of measuring the frequency band with the highest value.

The inventive system is capable of guaranteeing the perfect calibration of the whole chain of transducers, either starting from the warranty provided by the first accelerometer or reading the acceleration value a zero frequency and comparing it with the gravity acceleration, after having validated the first accelerometer, the system comparing the values read in the overlapping area between the first accelerometer and the immediately following one, thereby also validating the correct calibration of the second transducer, such procedure being then repeated every time in case of systems with more than two transducers per group of accelerometers.

Moreover, through such signals, calibrated and with a wide frequency spectrum, the microprocessor is adapted to further process the signals to obtain a processed signal to be communicated, in a digital or analogue way, through the electronic output circuit (5).

And more, the inventive system can be suitable, if one of the transducers of the chain is not adequately calibrated, to automatically self-calibrate itself, and to communicate as output through a suitable digital output, for example an electric, luminous or sound output, its previous incorrect calibration.

## Claims

1. Accelerometer system with automatic calibration composed of: an electronic conditioning and digitizing circuit (5), a vibrating device (4) driven by said electronic circuit (5), and a set of groups of accelerometer transducers (1, 2, 3) wherein:
a. each group is assembled aligned along the direction of one of the measuring axes of said accelerometer system, and each group is assembled aligned to a different axis from any other group
b. each group is composed of at least two accelerometer transducers capable of reading different frequency bands which are partially overlapped
c. each group is composed of a first transducer which has a band starting from zero frequency or which is able to autonomously guarantee validity and calibration of the performed reading
d. the vibrating system (4), driven by the electronic circuit (5), is designed to generate a vibration in the range of overlapping of the two frequency bands of the different accelerometer transducers (1, 2, 3),
the accelerometer system further comprising an analysis algorithm which, managed by the electronic circuit (5), allows reading the digitized signals coming from each group of accelerometers (1, 2, 3) and re-combining them for every axis in a global wide band signal, which, as lower frequency, has value zero or the lower value of the band of the first transducer, and, as maximum value, the maximum frequency value of the accelerometer capable of measuring the frequency band with the highest value,
wherein each group of accelerometers (1, 2, 3) is composed of at least two transducers (6, 7) which are capable of reading, in parallel, different frequency bands which are partially overlapped and one of which has a band which starts from zero frequency (6) or which is able to check its actual operation and guarantee its calibration in time;
wherein the system is designed to calibrate the whole chain of transducers, either by starting from the warranty provided by the first accelerometer or by reading the acceleration value at zero frequency and comparing it with the gravity acceleration, after having validated the first accelerometer, the analysing algorithm of the system being designed to compare the values read in the overlapping area between the first accelerometer (1) and the immediately following accelerometer (2), thereby also validating the correct calibration of the second transducer, said comparing being then repeated every time in case of systems with more than two transducers per group of accelerometers (1, 2, 3); and
wherein the system is adapted, when one of the transducers of the chain is not adequately calibrated, to automatically self- calibrate itself, and to communicate as output through a suitable digital output, for example an electric, luminous or sound output, its previous incorrect calibration.

2. System according to claim 1, **characterized in that** it comprises three groups, each assembled in one of the three Cartesian directions for a three-axes system.

3. System according to any one of the previous claims, **characterized in that**, through said signals, calibrated and with a wide frequency spectrum, a microprocessor is adapted to further process the signals to obtain a processed signal to be communicated, in an analogue or digital way, through the electronic output circuit (5).

## Patentansprüche

1. Beschleunigungssystem mit automatischer Kalibrierung, das aus Folgendem besteht: einem elektronischen Schaltkreis für Klimatisierung und Digitalisierung (5), einem Vibrationsgerät (4), das durch den genannten elektronischen Schaltkreis (5) gesteuert wird, und einer Gruppeneinheit von Beschleunigungsgebern (1, 2, 3), in dem:
a. jede Gruppe in der Richtung einer der Messachsen des genannten Beschleunigungssystems montiert wird und jede Gruppe mit einer anderen Achse aus einer beliebigen anderen Gruppe montiert ausgerichtet wird
b. jede Gruppe aus mindestens zwei Beschleunigungsgebern besteht, die getrennte Frequenzbänder lesen können, welche teilweise überlagert sind
c. jede Gruppe aus einem ersten Geber besteht, der ein Band hat, das von der Frequenz null ausgeht oder der fähig ist, autonom die Gültigkeit und die Kalibrierung der ausgeführten Lesung zu garantieren
d. das Vibrationssystem (4), das vom elektronischen Schaltkreis (5) gesteuert wird, entwickelt wurde, um eine Vibration im Überlagerungsbereich der beiden Frequenzbänder der verschiedenen Beschleunigungsgeber (1, 2, 3) zu erzeugen,
das Beschleunigungssystem außerdem einen Analysealgorithmus enthält, der durch Steuerung vom elektronischen Schaltkreis (5) ermöglicht, die digitalisierten Signale zu lesen, die aus jeder Beschleunigungsgruppe (1, 2, 3) kommen, und diese für jede Achse in einem Gesamt-Breitbandsignal zu rekombinieren, dessen niedrigere Frequenz der Wert null ist, oder der niedrigere Wert des ersten Gebers, und dessen höherer Wert der höhere Frequenzwert des Beschleunigungsmesser ist, welcher fähig ist, das Frequenzband mit dem höchsten Wert zu messen,
wobei jede Gruppe der Beschleunigungsmesser (1, 2, 3) aus mindestens zwei Gebern (6, 7) besteht, die fähig sind, parallel getrennte Frequenzbänder zu lesen, die teilweise überlagert sind, und von denen eins ein Band hat, das von der Frequenz null (6) ausgeht oder das fähig ist, seine effektive Funktionsweise zu kontrollieren und seine Kalibrierung im Laufe der Zeit zu garantieren;
wobei das System entwickelt wurde, um die gesamte Geberkette zu kalibrieren oder von der Garantie auszugehen, die vom ersten Beschleunigungsmesser geboten wird, oder den Beschleunigungswert mit Frequenz null zu lesen und diesen mit der Beschleunigung der Schwerkraft zu vergleichen, nachdem der erste Beschleunigungsmesser validiert wurde, der Analysealgorithmus des Systems wurde entwickelt, um die im Überlagerungsbereich zwischen dem ersten Beschleunigungsmesser (1) und dem unmittelbar folgenden Beschleunigungsmesser (2) gelesenen Werte zu vergleichen und auf diese Weise auch die korrekte Kalibrierung des zweiten Gebers zu validieren, der genannte Vergleich wird im Falle von Systemen mit mehr als zwei Gebern je Gruppe der Beschleunigungsmesser (1, 2, 3) von Mal zu Mal wiederholt; und
wobei das System dazu dient, sich automatisch selbst zu kalibrieren, falls einer der Geber der Kette nicht entsprechend geeicht sein sollte, und am Ausgang durch das entsprechende digitale Output, zum Beispiel elektrisch, leuchtend oder akustisch seine vorhergehende nicht korrekte Eichung zu melden

2. System gemäß Patentanspruch 1, das **dadurch gekennzeichnet ist, dass** es drei Gruppen enthält, die jeweils in einer der drei kartesischen Richtungen für ein triaxiales System montiert werden.

3. System gemäß einem beliebigen der vorhergehenden Patentansprüche, das **dadurch gekennzeichnet ist, dass** ein Mikroprozessor durch die genannten kalibrierten Signale und mit Breitbandfrequenz dazu dient, die Signale weiterhin zu verarbeiten, um ein verarbeitetes Signal zu erhalten, das analog oder digital durch den elektrischen Schaltkreis (5) am Ausgang gemeldet werden kann.

## Revendications

1. Système accélérométrique à calibration automatique composé de : un circuit électronique de conditionnement et de numérisation (5), un dispositif vibrant (4) piloté par un circuit électronique (5) et un ensemble de groupes de transducteurs accélérométriques (1, 2, 3) où :
a. chaque groupe est monté dans la direction de l'un des axes de mesure du système accélérométrique et chaque groupe est assemblé, de manière alignée, à un axe différent de tout autre groupe
b. chaque groupe est composé au moins de deux transducteurs accélérométriques en mesure de lire des bandes de fréquence distinctes qui sont partiellement superposées
c. chaque groupe est composé d'un premier transducteur qui a une bande partant de la fréquence zéro ou qui est en mesure de garantir, de manière autonome, la validité et la calibration de la lecture exécutée
d. le système vibrant (4), commandé par le circuit électronique (5), a été conçu pour engendrer une vibration dans la plage de superposition des deux bandes de fréquence des différents transducteurs accélérométriques (1, 2, 3),
le système accélérométrique comprend par ailleurs un algorithme d'analyse qui, géré par le circuit électronique (5), permet de lire les signaux numérisés provenant de chaque groupe d'accéléromètres (1, 2, 3) et de les réorganiser pour chaque axe en un signal général à bande large qui a comme fréquence la plus faible la valeur zéro ou la valeur inférieure de la bande du premier transducteur et comme valeur maximale la valeur de fréquence la plus élevée de l'accéléromètre qui est à même de mesurer la bande en fréquence dont la valeur est la plus élevée,
où chaque groupe d'accéléromètres (1, 2, 3) est composé au moins de deux transducteurs (6, 7) qui sont en mesure de lire, de manière parallèle, des bandes de fréquence distinctes qui sont partiellement superposées et dont l'une d'entre elles a une bande qui part de la fréquence zéro (6) ou qui est à même de contrôler son fonctionnement effectif et de garantir la calibration au cours du temps ;
où le système a été conçu pour calibrer toute la chaîne de transducteurs, soit en partant de la garantie fournie par le premier accéléromètre, soit en lisant la valeur de l'accélération à fréquence zéro et en la comparant avec l'accélération de gravité, après avoir validé le premier accéléromètre ; l'algorithme d'analyse du système a été conçu pour comparer les valeurs lues dans la zone de superposition entre le premier accéléromètre (1) et l'accéléromètre (2) qui se trouve immédiatement après, en validant ainsi la calibration correcte du second transducteur ; la comparaison est répétée à chaque fois en cas de systèmes dotés de plus de deux transducteurs par groupe d'accéléromètres (1, 2, 3) ; et
où le système est apte, au cas où l'un des transducteurs de la chaîne ne serait pas calibré correctement, à effectuer automatiquement l'auto-calibration et à communiquer à travers une sortie numérique, par ex. électrique, lumineuse ou sonore, la calibration précédente qui n'était pas correcte

2. Système selon la revendication 1, **caractérisé en ce qu'**il comprend trois groupes montés chacun dans l'une des trois directions cartésiennes pour un système triaxial.

3. Système, selon l'une des revendications précédentes, **caractérisé en ce que**, à travers les signaux calibrés et à large spectre de fréquence, un microprocesseur est apte à traiter ultérieurement les signaux pour obtenir un signal élaboré à communiquer, de manière soit analogique soit numérique, à travers le circuit électronique (5) à la sortie.
